# EUROPEAN PATENT APPLICATION

(11) **EP 4 492 313 A1**
(43) Date of publication of application: **15.01.2025**
(21) Application number: 24182973.8
(22) Date of filing: 19.06.2024
(51) Int. Cl.: G06Q 20/20, G07G 1/00, G07G 1/14, G07G 3/00

(54) **POINT-OF-SALE DEVICE, SYSTEM, AND METHOD**

(30) Priority: 07.07.2023 JP 2023112542
(71) Applicant: Toshiba TEC Kabushiki Kaisha, Tokyo 141-8562 (JP)
(72) Inventor: Kato, Takeshi, Tokyo, 141-8562 (JP)
(74) Representative: Bandpay & Greuter

(57) **Abstract**

A point-of-sale device includes an interface unit for acquiring a recognition result that is a recognition of a product based on a captured image of the product, a user input unit for receiving user operations, and a processor. The processor is configured to execute a registering process for a sales transaction based on the acquired recognition result, cause a display screen to display a list of each product registered in the sales transaction, and receive a change operation via the user input unit to change a registered product on the list. The processor adds information corresponding to the change operation to the displayed list and then receives a transaction termination operation from the user input unit, the termination operation indicating an end of the registering process. After receiving the termination operation, the processor sends a change notification to a clerk terminal.

## Description

### FIELD

Embodiments of the present disclosure relate generally to point-of-sale devices, point-of-sale methods, and point-of-sale systems.

### BACKGROUND

In the related art, for stores such as shopping centers, mass merchandisers, and department stores, there are self-service point-of-sale (POS) terminals that allow customers to perform a product registering process and a payment process. Some POS terminals capture the images of the products to be purchased by the customers, recognize the products from the captured image, and perform the product registering process based on image recognition results.

In some instances, the self-service POS terminal also allows the customers to perform a change (editing) operation on the registered products. For example, when an incorrect product is recognized from the image and erroneously registered, the customer can manually perform a change operation to delete the incorrect product. However, since such a change operation may be performed for an illicit purpose such avoiding payment for a correctly registered product, a clerk is required to confirm the changed contents each time a change operation is performed. In some cases, depending on the store, change operations by the customer may be entirely prohibited, and a clerk may have to perform the change operation each time such is necessary.

Thus, in the related art systems, there is a heavy burden on the clerk since it is necessary to call a clerk every time a change operation is to be performed or to have a clerk confirm customer-performed changes.

### DISCLOSURE OF INVENTION

To this end, there is provided a point-of-sale device according to claim 1. There is also provided a point-of-sale system according to claim 10. There is also provided a point-of-sale method according to claim 13. Preferred embodiments are set out in dependent claims.

### BRIEF DESCRIPTION OF THE DRAWINGS

FIG. 1 is a diagram illustrating an example of a product sales data processing system according to an embodiment.
FIG. 2 is a diagram illustrating an example of package recognition according to an embodiment.
FIG. 3 is a diagram illustrating an example of a hardware configuration of a POS terminal according to an embodiment.
FIG. 4 is a diagram illustrating an example of a data structure of a product master according to an embodiment.
FIG. 5 is a diagram illustrating an example of a hardware configuration of an imaging device according to an embodiment.
FIG. 6 is a diagram illustrating an example of a hardware configuration of an edge device according to an embodiment.
FIG. 7 is a diagram illustrating an example of a hardware configuration of a clerk terminal according to an embodiment.
FIG. 8 is a diagram illustrating an example of a hardware configuration of a store server according to an embodiment.
FIG. 9 is a diagram illustrating an example of functional aspects of a POS terminal, an imaging device, and an edge device according to an embodiment.
FIG. 10 is a diagram illustrating an example of a product selection screen displayed on a POS terminal of an embodiment.
FIG. 11 is a diagram illustrating an example of a product registration screen displayed on a POS terminal of an embodiment.
FIG. 12 is a diagram illustrating an example of a product registration screen displayed on a POS terminal of an embodiment.
FIG. 13 is a sequence diagram illustrating processes executed by a product sales data processing system of an embodiment.
FIG. 14 is a flowchart illustrating an example of processes performed by a POS terminal of an embodiment.

### DETAILED DESCRIPTION

An embodiment of the present disclosure represents a technological solution to existing art related to a product sales data processing device and method. An embodiment can reduce a burden on a clerk related to change operations related to registered products and the like.

According to one embodiment, a point-of-sale device includes an interface unit for acquiring a recognition result from an external device, the recognition result being a recognition of a product based on a captured image of the product, a user input unit for receiving user operations, and a processor. The processor is configured to: execute a registering process for registering the product in a sales transaction based on the acquired recognition result; cause a display screen to display a list of each product registered in the sales transaction; receive a change operation via the user input unit to change a registered product on the list; add information corresponding to the change operation to the list displayed on the display screen; receive a termination operation from the user input unit, the termination operation indicating an end of the registering process; and, after receiving the termination operation, send a change notification to a clerk terminal if the change operation was received before the termination operation was performed.

Hereinafter, certain example embodiments will be described with reference to the drawings. In the examples below, a product sales data processing device with which customers themselves perform a registration operation and a payment operation is described. Note that the present disclosure is not limited to the specific examples described below.

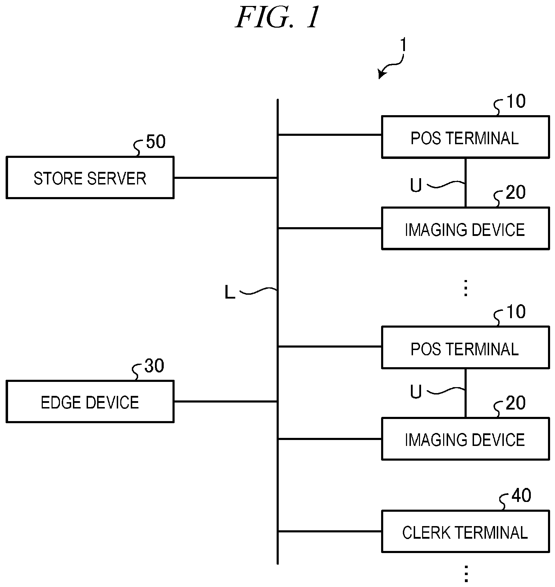

FIG. 1 is a diagram illustrating an example of a product sales data processing system according to the embodiment. In FIG. 1, a product sales data processing system 1 is installed in a store. The store may be a supermarket, a mass merchandiser ("big box" retail store), a convenience store, or a specialty store. The product sales data processing system 1 includes one or more point of sales (POS) terminals 10 (product sales data processing devices, corresponding to a point-of-sale device), one or more imaging devices 20, an edge device 30, a clerk terminal 40, and a store server 50.

The POS terminal 10, the edge device 30, the clerk terminal 40, and the store server 50 are connected to a communication line L such as a local area network (LAN) that allows the components to communication to one another. An imaging device 20 is connected to each POS terminal 10 by, for example, a universal serial bus (USB) cable U or the like. The imaging device 20 can also be connected to the communication line L. Note that the imaging device 20 may be connected to the communication line L via the POS terminal 10 in some examples.

The imaging device 20 includes an imaging element such as a charge coupled device (CCD) or a complementary metal oxide semiconductor (CMOS). The imaging device 20 is positioned to face the customer who operates the corresponding POS terminal 10. The imaging device 20 is used to acquire images the products being purchased by the customer. Specifically, in the present embodiment, the customer operating the POS terminal 10 holds each product to be purchased in front of the imaging device 20 to perform the registering process, and the imaging device 20 acquires an image of the product.

When the imaging device 20 acquires an image (hereinafter also referred to as the captured image), the imaging device 20 outputs the acquired image to the edge device 30. Specifically, the imaging device 20 in this example outputs images captured at a fixed frame rate to the edge device 30.

The imaging device 20 attempts to detect symbols such as barcodes or two-dimensional codes from the captured images by performing code recognition on the image. In this code recognition, the barcode or two-dimensional code attached to the product is detected in the image and decoded. The decoded information is output to the POS terminal 10. Product specifying information matching the symbol on the product is included in the decode information and the imaged product can be identified based on the product specifying information. In the present embodiment, a product code is used as the product specifying information, but other information other than a product code may be used so long as the product can be identified by the information.

In some examples, the imaging device 20 extracts images in which the product is shown or images in which the product is likely to be shown from among all the images obtained by imaging and may send the images to the edge device 30 for processing or symbol extraction. The image extraction method is not particularly limited, and any known technique can be used. For example, the imaging device 20 may detect a motion of an object in an image from a difference between a plurality of temporally consecutive frames, extract the image in which the motion has been detected, and use the image as the processing target.

The edge device 30 is an information processing device that performs processes such as image processing and image recognition. Specifically, the edge device 30 performs object or package recognition to recognize the product in the image supplied from the imaging device 20.

In this context, package recognition is a technique that identifies the product imaged by the imaging device 20 based on object features in the appearance of the product depicted in the image. Herein, the object features in the appearance of the product include, for example, package design, surface pattern, object color, surface texture, package shape, and the like of a product package or container.

For package recognition, known techniques such as generic object recognition and image recognition using a model such as a deep learning model can be used. In the package recognition, based on feature data extracted from the image, a similarity score or the like for comparison to known products may be calculated and among the known products with similar feature data, one product for which the degree of similarity (also called likelihood) is equal to or greater than a threshold value is specified (identified) as the product in the image.

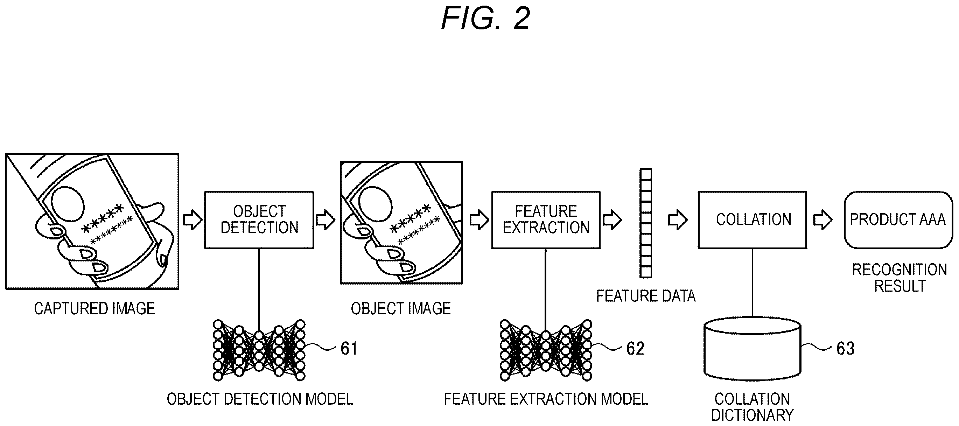

FIG. 2 is a diagram illustrating an example of the package recognition. As illustrated in FIG. 2, by using three types of trained models or dictionary data (hereinafter collectively referred to as dictionaries) for an object detection model 61, a feature extraction model 62, and a collation dictionary 63, the product can be specified from the image captured by the imaging device 20.

The object detection model 61 is a dictionary for detecting a region including an object shown in the captured image. When the captured image is input, the object detection model 61 detects and outputs an area (hereinafter also referred to as an object image or object area) in which the product is depicted in the captured image.

The feature extraction model 62 is a dictionary for extracting feature data corresponding to the features of the appearance of the product from the product represented in the object image detected by the object detection model 61. After the obj ect image or the captured image including the object image is input, the feature extraction model 62 extracts and then outputs the feature data corresponding to the features of the appearance of the product represented in the object image.

The collation dictionary 63 is a dictionary for specifying the product(s) that are similar to feature data of the product based on the feature data. For example, the collation dictionary 63 stores feature data corresponding to the features of the product in association with a product code for each product sold in the store. The collation dictionary 63 calculates a degree of similarity indicating how similar the stored products are to the imaged product by collating the input feature data to the stored feature data. The higher the degree of similarity, the greater the resemblance to the imaged product (that is, the probability of the product being the imaged product). As an example, a product with the degree of similarity of 95% or more is extremely likely to be the same product as the imaged product.

The edge device 30 detects the object area for the product in the image captured by the imaging device 20 by using the object detection model 61. Next, the edge device 30 extracts the feature data that quantitatively indicates the appearance (features) of the product shown in the object area (object image) as a multidimensional vector quantity or the like by using the feature extraction model 62. Then, the edge device 30 calculates the degree of similarity by collating the extracted feature data with the feature data of products stored in the dictionary by using the collation dictionary 63 and recognizes the product according to the degree of similarity.

Specifically, when there is one product for which the degree of similarity is a threshold value (for example, 95%) or higher, the edge device 30 identifies the product as the product imaged by the image device 20. When there is no product with a degree of similarity at or above the threshold value, the edge device 30 selects a plurality of products having a high degree of similarity as candidate products without specifying the product. For example, when the degree of similarity of every product is less than the threshold value, the edge device 30 extracts a predetermined number of candidate products (for example, four) from the products with high degrees of similarity. The edge device 30 uses the product code of the specified product or the candidate products as a recognition result of the package recognition, and transmits the captured image to the imaging device 20 that sent the captured image. Note that, when the edge device 30 provides a plurality of candidate products, the edge device 30 may include the degree of similarity calculated for each of the candidate products and transmits the degree of similarity along with the image. Even when the edge device 30 is able to uniquely specify the product, the edge device 30 may include the degree of similarity and transmit the degree of similarity with the image. When the edge device 30 has a lower limit threshold value for a degree of similarity determination and the degree of similarity is less than the lower limit threshold value, the edge device 30 may exclude the product having this low degree of similarity from the candidate products.

Upon receiving the recognition result from the edge device 30, the imaging device 20 outputs the recognition result to the POS terminal 10. Note that the imaging device 20 can output the product code of the product as specified by its own code recognition processing and the product code received from the edge device 30 (that is, the product code specified by the package recognition process) to the POS terminal 10 in an identifiable state. For example, the imaging device 20 outputs a flag value that can identify a code recognition or a package recognition, so that a product code specified by the code recognition and the product code specified by the package recognition can be output in an identifiable manner.

In the present embodiment, the edge device 30 sends the result of the package recognition to the POS terminal 10 via the imaging device 20, but the embodiments are not limited thereto, and the result may be directly sent to the POS terminal 10. In such a case, the edge device 30 stores, for example, setting information that associates IP addresses of a pair of the POS terminal 10 and the imaging device 20, and transmits the recognition result of the product (or candidate products) specified from the captured image directly to the POS terminal 10 corresponding to the imaging device 20 that sent the captured image.

The clerk terminal 40 is operated by a clerk in the store. The clerk terminal 40 may be, for example, a portable terminal device, or may be an attendant terminal located in the same area as the POS terminal 10. The clerk terminal 40 can confirm a state of the POS terminal 10.

The store server 50 is installed in, for example, a backroom of the store. The store server 50 stores a product master in which the product name, price, product image, and the like is associated with a product code of each product sold in the store. The store server 50 provides the product master to each POS terminal 10. For example, the store server 50 transmits the product master to each POS terminal 10 and stores the product master locally in the POS terminal 10. For example, the store server 50 stores the product master so that each POS terminal 10 can refer to the product master.

The store server 50 collects sales data received from the POS terminal 10. The store server 50 tracks sales of products in the store based on the collected sales data.

The POS terminal 10 performs the product registering process and the payment process for the products sold in the store by cooperating with other devices. Specifically, the POS terminal 10 performs the registering process in which the POS terminal 10 is operated by the customer. In this process, the customer holds the product over the imaging device 20 and registers the product as such is specified based on the image captured by the imaging device 20 as a purchase target. According to an operation of instructing the end of the registering process, the POS terminal 10 executes a payment process in which the total price of the products registered is paid by the customer.

For example, one or more POS terminals 10 (e.g., three as in FIG. 1) are installed in a settlement area within the store. The POS terminal 10 is a product sales data processing device operated by the customers themselves. When the customer performs the registration operation by holding the product to be purchased over the imaging device 20, the POS terminal 10 executes the product registering process on the product to be purchased based on the product code of the product specified by code recognition or package recognition described above. The product registering process is a process of reading the specified product code and the product information (product name, product price, and the like) of the product corresponding to the product code from the product master and storing the product code and the product information in a storage medium.

Note that, in the present embodiment, the storage medium that becomes a storage destination of the product registering process is provided in the POS terminal 10, but the storage medium is not limited thereto, and may be provided in, for example, an external device such as the store server 50.

The POS terminal 10 executes the payment process for the products registered in the product registering process. The payment process refers to a totaling process for the transaction, specifically, displaying the total amount on the displaying unit 16, a payment process using cash, credit card, electronic money, or the like, calculating change based on a deposited amount and displaying the change due on the displaying unit 16 in the case of cash payment, issuing a receipt printed with product information and accounting information (total amount, deposit amount, change amount, loyalty point information, and the like) by a printer 18 based on the product information stored in a registered product storing unit 131 in the product registering process.

The POS terminal 10 transmits the product information and the accounting information (also collectively referred to as sales data) to the store server 50. In the embodiment, the timing for transmitting the sales data from the POS terminal 10 to the store server 50 is when the payment process is terminated (completed), but the embodiment is not limited thereto, and for example, when the store closes, sales data for one day can be collectively transmitted.

As described above, in the product sales data processing system 1, the product imaged by the imaging device 20 can be specified by using either or both code recognition and package recognition. In each of the POS terminals 10, when the imaged product can be specified based on the recognition result obtained earlier, among the recognition results of the code recognition and the package recognition performed based on the captured image of the imaging device 20, the product registering process is performed by using the product code of the product.

Next, a configuration of each device included in the product sales data processing system 1 will be described.

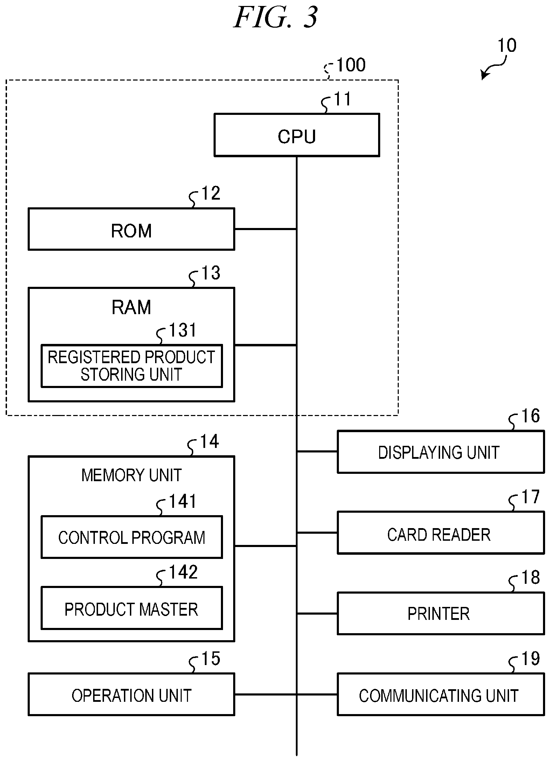

FIG. 3 is a diagram illustrating an example of a hardware configuration of the POS terminal 10. As illustrated in FIG. 3, the POS terminal 10 includes a central processing unit (CPU) 11, which is an example of a processor, a read only memory (ROM) 12, a random access memory (RAM) 13, a memory unit 14, and the like.

The CPU 11 includes one or more processing circuits and integrally controls the operation of the POS terminal 10. The ROM 12 stores various programs that can be executed by the CPU 11. The RAM 13 is a work area for temporarily storing programs and various types of data. For example, the RAM 13 stores the recognition result of the code recognition or the package recognition. The RAM 13 also holds the registered product storing unit 131 for storing product codes, numbers, product information, and the like of the products processed in the product registering process.

The memory unit 14 comprises a nonvolatile memory such as a hard disc drive (HDD) or a flash memory that holds information even when power is turned off. The memory unit 14 stores various programs that can be executed by the CPU 11, setting information, and the like. For example, the memory unit 14 stores a control program 141 that can be executed by the CPU 11, a product master 142, and the like. The product master 142 stores product information in association with the product code of each product sold in the store.

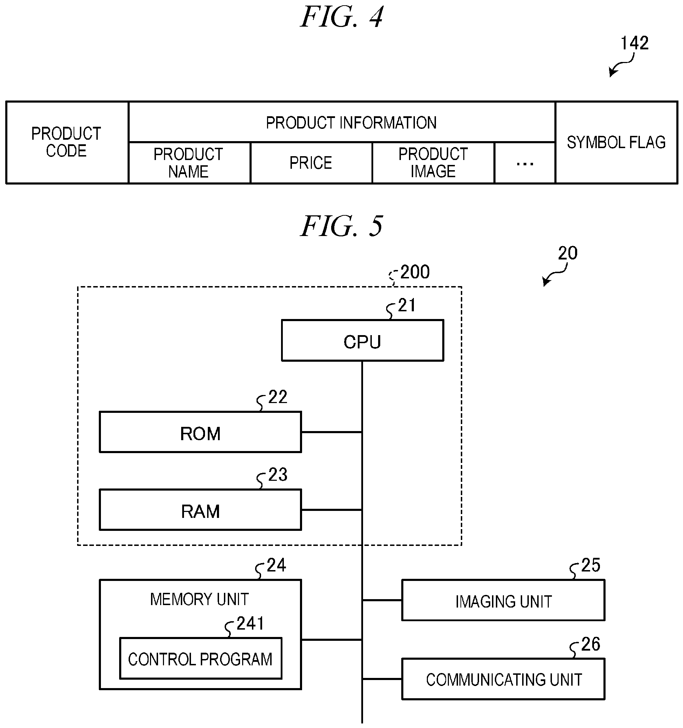

FIG. 4 is a diagram illustrating an example of a data structure of the product master 142. As illustrated in FIG. 4, the product master 142 stores product information and a symbol flag of a product corresponding to a product code.

The product information includes various types of information related to the product. For example, the product information includes product name, price, and product image. The product image is image data representing the appearance or the like of the product. The symbol flag is binary flag information indicating whether a symbol is attached to the product.

A product with the symbol attached can become a target of code recognition or package recognition. On the other hand, a product without the symbol attached cannot become a target of code recognition and can only be recognized through package recognition. Examples of a product without a symbol attached include fresh foods and in-store prepared foods.

Note that the data structure of the product master 142 is not limited to the example illustrated in FIG. 4. For example, the product master 142 may have a data structure without symbol flags.

Returning to FIG. 3, the CPU 11, the ROM 12, the RAM 13, and the memory unit 14 are connected to each other via a bus or the like. Herein, the CPU 11, the ROM 12, and RAM 13 configure a control unit 100 of the POS terminal 10. The control unit 100 implements functions of the POS terminal 10 by the CPU 11 operating according to the control program 141 stored in the ROM 12 or the memory unit 14 and loaded in the RAM 13.

The control unit 100 is connected to an operating unit 15, a displaying unit 16, a card reader 17, the printer 18, and the like via a bus or the like.

The operating unit (corresponding to user input unit) 15 includes various operation keys (e.g., buttons or the like) for an operator to perform operation inputs. The operating unit 15 includes a termination key as an example of the operation key. The termination key is the operation key that is operated when the POS terminal 10 terminates the product registering process and proceeds to the payment process. The displaying unit 16 is, for example, a liquid crystal display and displays information to the customer who is the operator of the POS terminal 10. Under the control of the control unit 100, the displaying unit 16 displays, for example, product information (product name, product price, and the like) of the product processed in the product registering process and accounting information related to the payment process. Note that the operating unit 15 may be a touch panel provided on the displaying unit 16.

The card reader 17 is a reading device for reading card information related to payment such as a credit card, a debit card, an electronic money card, and the like, for example, when performing the payment process by card. The printer 18 is, for example, a printing device such as a thermal printer. Under the control of the control unit 100, the printer 18 issues a receipt on which product information, payment information, and the like are printed.

The control unit 100 is connected to the communicating unit 19 via a bus or the like. The communicating unit 19 is various communication interfaces for connecting with the external devices. The communicating unit 19 is communicably connected to the imaging device 20 via the cable U. The communicating unit 19 is communicably connected to the edge device 30, the clerk terminal 40, and the store server 50 via the communication line L.

Next, a hardware configuration of the imaging device 20 will be described. FIG. 5 is a diagram illustrating an example of a hardware configuration of the imaging device 20. As illustrated in FIG. 5, the imaging device 20 includes a CPU 21, which is an example of a processor, a ROM 22, a RAM 23, a memory unit 24, and the like.

The CPU 21 includes one or more processing circuits and integrally controls the operation of the imaging device 20. The ROM 22 stores various programs that can be executed by the CPU 21. The RAM 23 is a work area for temporarily storing programs and various types of data. For example, the RAM 23 stores images captured by an imaging unit 25, intermediate data or a processing result (recognition result) of the code recognition, or the like.

The memory unit 24 comprises a nonvolatile memory such as an HDD or a flash memory that holds information even when power is turned off. The memory unit 24 stores various programs that can be executed by the CPU 21, setting information, and the like. For example, the memory unit 24 stores a control program 241 and the like that can be executed by the CPU 21.

The CPU 21, the ROM 22, the RAM 23, and the memory unit 24 are connected to each other via a bus or the like. Herein, the CPU 21, the ROM 22, and the RAM 23 configure a control unit 200 of the imaging device 20. The control unit 200 implements the functions of the imaging device 20 by causing the CPU 21 to operate according to the control program 241 stored in the ROM 22 or the memory unit 24 and loaded in the RAM 23.

The control unit 200 is connected to the imaging unit 25 and a communicating unit 26 via a bus or the like. The imaging unit 25 is a camera module provided with an imaging element such as a CCD. The communicating unit 26 can be various communication interfaces for connecting with external devices. The communicating unit 26 is communicably connected to the POS terminal 10 via the cable U. The communicating unit 26 is communicably connected to the edge device 30 and the like via the communication line L.

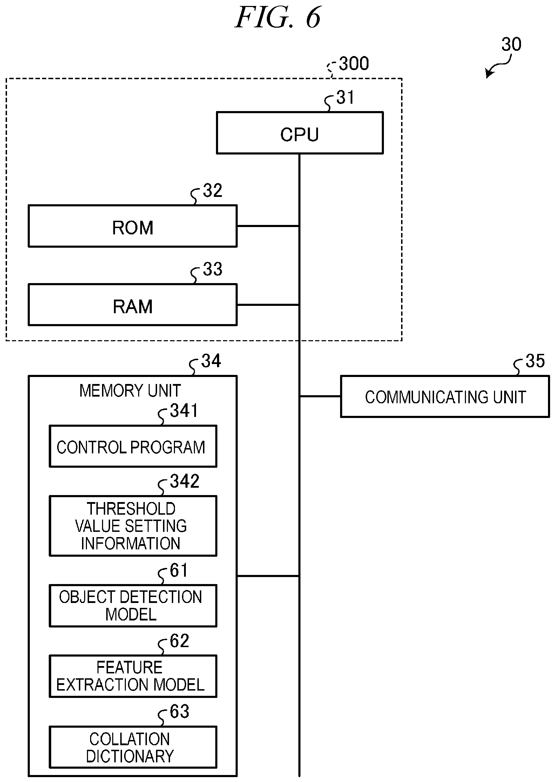

Next, the hardware configuration of the edge device 30 will be described. FIG. 6 is a diagram illustrating an example of a hardware configuration of the edge device 30. As illustrated in FIG. 6, the edge device 30 includes a CPU 31, which is an example of a processor, a ROM 32, a RAM 33, a memory unit 34, and the like.

The CPU 31 includes one or more processing circuits and integrally controls the operation of the edge device 30. The ROM 32 stores various programs that can be executed by the CPU 31. The RAM 33 is a work area for temporarily storing programs and various types of data. For example, the RAM 33 stores images transmitted from the imaging device 20, intermediate data or the processing result (recognition result) of the package recognition, and the like.

The memory unit 34 comprises a nonvolatile memory such as an HDD or a flash memory that holds information even when power is turned off. The memory unit 34 stores various programs that can be executed by the CPU 31, setting information, and the like. For example, the memory unit 34 stores a control program 341 that can be executed by the CPU 31. In addition to the object detection model 61, the feature extraction model 62, the collation dictionary 63, and the like described above, the memory unit 34 also stores the threshold value setting information 342 in which threshold values are set as indicators for uniquely specifying products based on the degree of similarity.

The CPU 31, the ROM 32, the RAM 33, and the memory unit 34 are connected to each other via a bus or the like. Herein, the CPU 31, the ROM 32, and the RAM 33 configure a control unit 300 of the edge device 30. The control unit 300 implements the functions of the edge device 30 by causing the CPU 31 to operate according to the control program 341 stored in the ROM 32 or the memory unit 34 and loaded in the RAM 33.

The control unit 300 is connected to a communicating unit 35 via a bus or the like. The communicating unit 35 can be various communication interfaces for connecting with the external devices. The communicating unit 35 is communicably connected to the POS terminal 10, the imaging device 20, the clerk terminal 40, the store server 50, and the like via the communication line L.

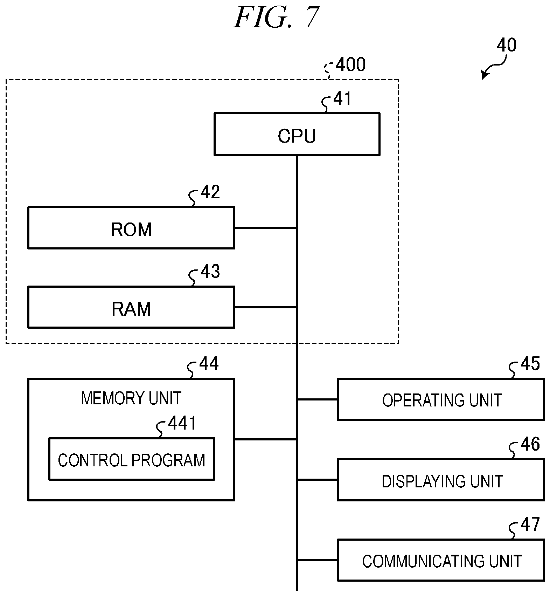

Next, a hardware configuration of the clerk terminal 40 will be described. FIG. 7 is a diagram illustrating an example of a hardware configuration of the clerk terminal 40. As illustrated in FIG. 7, the clerk terminal 40 includes a CPU 41, which is an example of a processor, a ROM 42, a RAM 43, a memory unit 44, and the like.

The CPU 41 includes one or more processing circuits and integrally controls the operation of the clerk terminal 40. The ROM 42 stores various programs that can be executed by the CPU 41. The RAM 43 is a work area for temporarily storing programs and various types of data.

The memory unit 44 comprises a nonvolatile memory such as an HDD or a flash memory that holds information even when power is turned off. The memory unit 44 stores various programs that can be executed by the CPU 41, setting information, and the like. For example, the memory unit 44 stores a control program 441 that can be executed by the CPU 41, and the like.

The CPU 41, the ROM 42, the RAM 43, and the memory unit 44 are connected to each other via a bus or the like. Herein, the CPU 41, the ROM 42, and the RAM 43 configure a control unit 400 of the clerk terminal 40. The control unit 400 implements the functions of the clerk terminal 40 by causing the CPU 41 to operate according to the control program 441 stored in the ROM 42 or the memory unit 44 and loaded in the RAM 43.

The control unit 400 is connected to an operating unit 45, a displaying unit 46, and the like via a bus or the like.

The operating unit 45 includes various operation keys for the operator to perform operation input. The displaying unit 46 is, for example, a liquid crystal display and displays information to the clerk who is the operator of the clerk terminal 40. Note that the operating unit 45 may be a touch panel provided on the displaying unit 46.

The control unit 400 is connected to a communicating unit 47 via a bus or the like. The communicating unit 47 can be various communication interfaces for connecting with external devices. The communicating unit 47 is communicably connected to the POS terminal 10, the imaging device 20, the edge device 30, and the store server 50 via the communication line L.

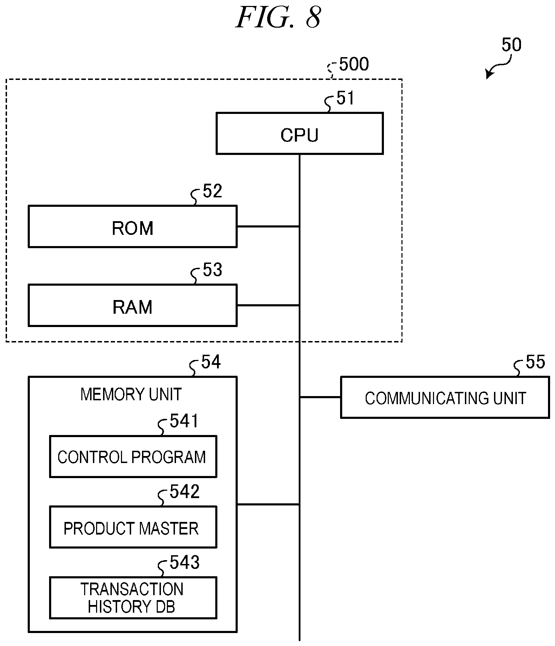

Next, a hardware configuration of the store server 50 will be described. FIG. 8 is a diagram illustrating an example of a hardware configuration of the store server 50. As illustrated in FIG. 8, the store server 50 includes a CPU 51, which is an example of a processor, a ROM 52, a RAM 53, a memory unit 54, and the like.

The CPU 51 includes one or more processing circuits and integrally controls the operations of the store server 50. The ROM 52 stores various programs that can be executed by the CPU 51. The RAM 53 is a work area for temporarily storing programs and various types of data. For example, the RAM 53 temporarily stores accounting data transmitted from the store server 50.

The memory unit 54 comprises a nonvolatile memory such as an HDD or a flash memory that holds information even when power is turned off. The memory unit 54 stores various programs that can be executed by the CPU 51, setting information, and the like. For example, the memory unit 54 stores a control program 541 that can be executed by the CPU 51. The memory unit 54 stores a product master 542, a transaction history database (DB) 543 for storing and managing accounting data, and the like. Note that the data structure of the product master 542 is the same as that of the product master 142. As the example, by providing (distributing) the product master 542 to each of the POS terminals 10, the product master 542 can be stored and used locally as the product master 142 in each of the POS terminals 10.

The CPU 51, the ROM 52, the RAM 53, and the memory unit 54 are connected to each other via a bus or the like. Herein, the CPU 51, the ROM 52, and the RAM 53 configure a control unit 500 of the store server 50. The control unit 500 implements functions of the store server 50 by causing the CPU 51 to operate according to the control program 541 stored in the ROM 52 or the memory unit 54 and loaded in the RAM 53.

The control unit 500 is connected to the communicating unit 55 via a bus or the like. The communicating unit 55 is various communication interfaces for connecting with the external devices. The communicating unit 55 is communicably connected to the POS terminal 10 and the like via the communication line L.

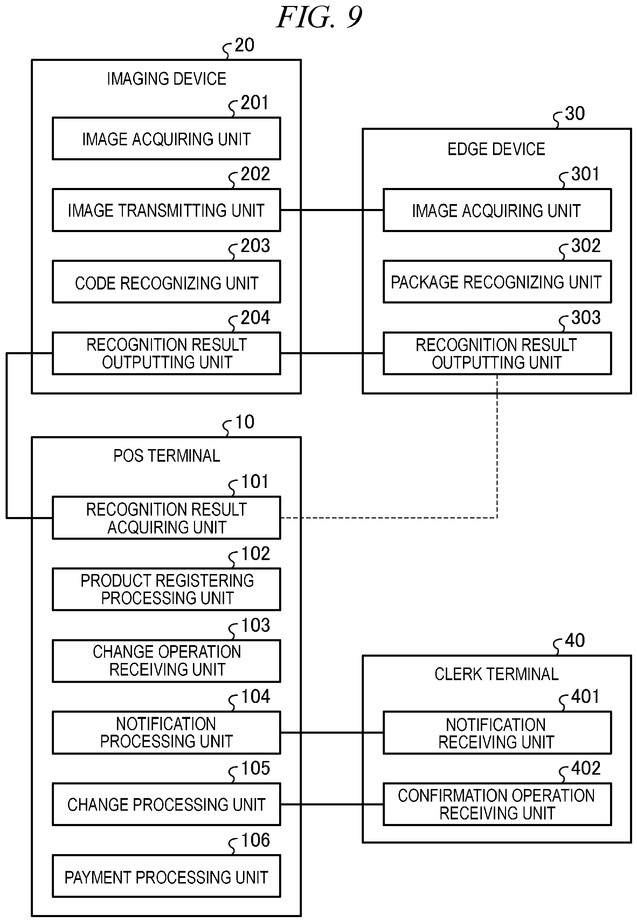

Next, functional aspects of POS terminal 10, imaging device 20, edge device 30, and clerk terminal 40 will be described. FIG. 9 is a diagram illustrating an example of a functional configuration of the POS terminal 10, the imaging device 20, the edge device 30, and the clerk terminal 40.

As illustrated in FIG. 9, the imaging device 20 includes an image acquiring unit 201, an image transmitting unit 202, a code recognizing unit 203, and a recognition result outputting unit 204.

The functions of the imaging device 20 can be implemented as a software configuration executed by the processor of the imaging device 20 operating according to the control program 241 stored in the ROM 22 or the memory unit 24, but is not limited thereto. For example, a portion or all of the functions provided by the imaging device 20 may be implemented as hardware such as a dedicated circuit.

The image acquiring unit 201 acquires the image captured by the imaging unit 25. Note that the image acquiring unit 201 uses known techniques such as motion detection to extract and acquire images that show the product or images that are likely to show the product from among the images obtained by imaging of the imaging unit 25.

The image transmitting unit 202 transmits the image acquired by the image acquiring unit 201 to the edge device 30. The code recognizing unit 203 attempts to detect a symbol such as a barcode from the image by performing the code recognition on the image acquired by the image acquiring unit 201. When the code recognizing unit 203 detects the symbol from the image, the code recognizing unit 203 decodes the symbol to obtain the decode information including the product code as the recognition result of the code recognition.

The recognition result outputting unit 204 outputs the recognition result obtained by the code recognition by the code recognizing unit 203 to the POS terminal 10. The recognition result outputting unit 204 outputs the recognition result of the package recognition received from the edge device 30 to the POS terminal 10. Note that the recognition result outputting unit 204 may output the recognition results of the code recognition and the package recognition in an identifiable state by outputting the recognition results together with a flag value indicating the recognizing method.

As illustrated in FIG. 9, the edge device 30 includes an image acquiring unit 301, a package recognizing unit 302, and a recognition result outputting unit 303.

The functions of the edge device 30 can be implemented as a software configuration executed by the processor of the edge device 30 operating according to the control program 341 stored in the ROM 32 or the memory unit 34, but is not limited thereto. For example, a portion or all of the functions of the edge device 30 may be implemented as hardware such as a dedicated circuit.

The image acquiring unit 301 acquires images transmitted from each of the imaging devices 20 via the communicating unit 35. By performing package recognition on the image acquired by the image acquiring unit 301, the package recognizing unit 302 attempts to detect the object image or extract the feature data from the image. When the package recognizing unit 302 confirms that a product with a degree of similarity of the threshold value or more exists in the collation dictionary 63 based on the feature data extracted from the image, the package recognizing unit 302 outputs the product code of this product as the recognition result. When there is no product with a degree of similarity of the threshold value or more, the package recognizing unit 302 extracts a predetermined number of products with high degree of similarity from the collation dictionary 63, and outputs information in which the product code of each extracted product (the candidate products) is associated with a degree of similarity as the recognition result.

Note that, when there are a plurality of products with a degree of similarity of the threshold value or more, the package recognizing unit 302 outputs information associating the product codes of these products as the recognition result.

The recognition result outputting unit 303 outputs the recognition result of the package recognition performed on the image to an external device related to the transmission source of the image. Specifically, the recognition result outputting unit 303 transmits the recognition result of the package recognition to the imaging device 20 that was the transmission source of the image via the communicating unit 35. Note that the recognition result outputting unit 303 may directly transmit the recognition result to the POS terminal 10 corresponding to the imaging device 20 that was the transmission source.

As illustrated in FIG. 9, the POS terminal 10 includes a recognition result acquiring unit 101, a product registering processing unit 102, a change operation receiving unit 103, a notification processing unit 104, a change processing unit 105, and a payment processing unit 106.

The functional aspects of the POS terminal 10 can be implemented as a software configuration of the processor of the POS terminal 10 operating according to the control program 141 stored in the ROM 12 or the memory unit 14, but is not limited thereto. For example, a portion or all of the functions of the POS terminal 10 may be implemented by hardware such as a dedicated circuit.

The recognition result acquiring unit 101 is an example of an acquiring unit (corresponding to interface unit). The recognition result acquiring unit 101 acquires the result of the code recognition and/or the package recognition performed by the imaging device 20 and the edge device 30. Specifically, the recognition result acquiring unit 101 acquires the recognition result of the code recognition and the package recognition from the imaging device 20 via the communicating unit 19. Note that, in the case of the configuration in which package recognition result is directly transmitted from the edge device 30 (recognition result outputting unit 303) to the POS terminal 10 (see the broken line in the figure), the recognition result acquiring unit 101 may acquire the package recognition result from the edge device 30.

The product registering processing unit 102 is an example of a registration unit and a displaying unit. The product registering processing unit 102 executes the product registering process based on the recognition result acquired by the recognition result acquiring unit 101. In other words, the product registering processing unit 102 executes the product registering process based on the result of the code recognition on the captured image of the product or the result of the package recognition.

Specifically, when the product is uniquely specified by the code recognition or the package recognition, that is, when the product code of just one product is included in the recognition result, the product registering processing unit 102 executes the product registering process for the product. Note that the product registering processing unit 102 may speed up the process by using the product code from whichever of the code recognition or the package recognition finishes first.

When the recognition result from the package recognition includes a plurality of product codes and the code recognition result is not acquired, the product registering processing unit 102 performs the product registering process based on the acquired recognition result. Specifically, when a plurality of candidate products are provided, the product registering processing unit 102 causes the displaying unit 16 to display the screen (hereinafter also referred to as a product selection screen) from which the candidate products can be selected.

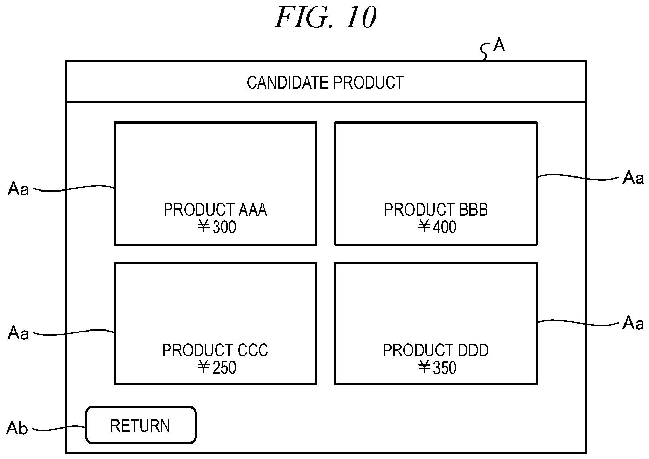

FIG. 10 is a diagram illustrating an example of a product selection screen A displayed on the POS terminal 10. As illustrated in FIG. 10, the product selection screen A includes a display area Aa for displaying a product corresponding to each product code included in the recognition results as candidate products.

In each display area Aa, product names, prices, images, and the like of the candidate products are displayed based on the product information of the candidate products. In FIG. 10, four candidate products are illustrated, and thus, a display area Aa is provided for each of the four candidate products. Note that, in the product selection screen A, the placement positions of the candidate products are not particularly limited, but it is preferable to arrange the candidate products according to the degree of similarity. For example, the configuration may be such that the items are arranged in order of top left, top right, bottom left, and bottom right in descending order of the degree of similarity.

The display area Aa also functions as an operator (button) for selecting the product as a registration target. When any one of the display areas Aa is selected by the customer, the product registering processing unit 102 executes the product registering process based on the product code corresponding to the candidate product in the selected display area Aa. The product registering processing unit 102 then erases the product selection screen A.

The product selection screen A includes a return button Ab. When the product registering processing unit 102 receives the operation (selection) of the return button Ab, the product registering processing unit 102 erases the product selection screen A and waits until a new recognition result is acquired.

When the product registering processing unit 102 executes the product registering process, the product registering processing unit 102 displays a screen (also referred to as a product registration screen) on the displaying unit 16 in which the product information such as product name and price of the registered products is displayed in order of the registered products.

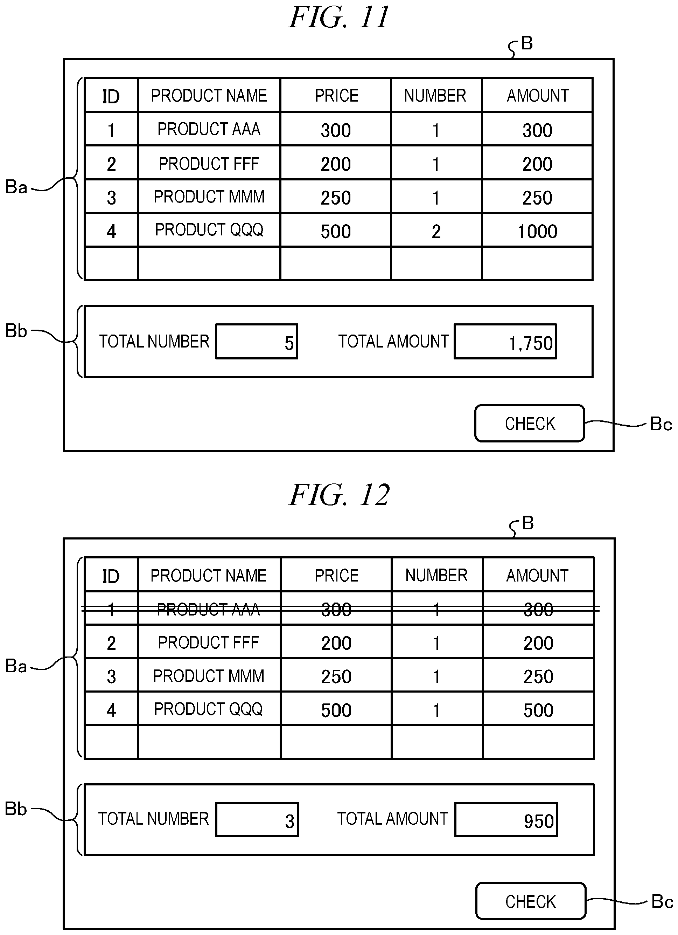

FIG. 11 is a diagram illustrating an example of the product registration screen displayed on the POS terminal 10. As illustrated in FIG. 11, a product registration screen B includes a product display area Ba and a total display area Bb.

In the product display area Ba, information such as product name, number, price (unit price), and the like of each product registered in the product registering process (hereinafter also referred to as a registered product) is displayed in association with the ID indicating a registration order. The total number of registered products and the total purchase price are displayed on the total display area Bb. Specifically, the product registering processing unit 102 calculates the total number and the total amount based on the price and number of the registered products, and displays the total number and the total amount in the total display area Bb.

On the product registration screen B, a change operation for the registered product can be received. Specifically, the change operation receiving unit 103 receives the change operation for the registered product via the operating unit 15. Herein, a "change operation" of the registered product refers to the operation of deleting a previously registered product, the operation of changing (increasing or decreasing) the registered number of the same product type (same product code), or the like.

The change operation receiving unit 103 is an example of a first receiving unit. Upon receiving the change operation, the change operation receiving unit 103 reflects the contents of the change operation on the product registration screen B. That is, the change operation updates the product registration screen B information. The change operation receiving unit 103 generates changed content information for the ID (entry) of the registered product that is the target of the change operation is associated with the contents of the change operation, and stores the changed content information in the RAM 13 or the like.

Herein, the change operation receiving unit 103 changes the display of the product registration screen B according to the contents of the change operation without yet changing the actual information in registered product storing unit 131. For example, when a deletion is instructed for the registered product with ID "1" illustrated in FIG. 11, the change operation receiving unit 103 adds and displays a cancel line (strikethrough) on the registered product with ID "1" as illustrated in FIG. 12. For example, when the instruction is given to reduce the number of registered product with ID "4" illustrated in FIG. 11 by 1, the number of ID "4" is reduced by 1 and displayed as illustrated in FIG. 12. Note that, when the instruction is given to increase or decrease the number, it is generally preferable to display the changed number in an emphasized (highlighted) manner so that the product that is a target of the change operation can be readily identified.

Then, the change operation receiving unit 103 updates and displays the total number and the total amount in the total display area Bb according to the contents of the change operation. Accordingly, the operator of the POS terminal 10 can visually confirm the contents of the change operation they performed themselves.

The product registration screen B is provided with an accounting button Bc for instructing the termination of the product registering process (or the start of the payment process). Note that the accounting button Bc is an example of a second receiving unit.

By the way, in the self-service product sales data processing device in which the customers themselves perform the product registration operation, since the customer has control over the operation, in addition to the change operation performed for fair reasons, there is a possibility that the change operation is performed for unfair (illicit) reasons.

For example, in the package recognition, since the products are recognized based on a probability value called degree of similarity, there is a possibility that a wrong product will be identified and registered. Then, to register the correct product, a legitimate change operation may be performed to delete an incorrectly registered product. On the other hand, for the purpose of shoplifting, or the like, there is a possibility that change operation is performed for unfair reasons such as deleting correctly registered products but still taking out the deleted products from the store.

For the reasons mentioned above, when the change operation for the registered product is performed by using the self-service product sales data processing device, it is preferable that confirmation by the clerk is performed. However, calling the clerk for every change operation places a heavy burden on the clerk, and there is room for improvement in such a system to ease the potential burdens on the clerk.

In the POS terminal 10 of the present embodiment, the burden on the clerk is reduced by requiring clerk confirmation only once for the change operations in the transaction. Specifically, when the notification processing unit 104 receives the instruction to terminate the product registering process (or to start the payment process) by operating the accounting button Bc or the like, the notification processing unit 104 determines whether change operation for the registered product has been performed based on the presence of changed content information.

The notification processing unit 104 is an example of a notifying unit. When there is changed content information, the notification processing unit 104 determines that a change operation has been performed on the registered products and transmits information (hereinafter also referred to as notification information) for notifying that the change operation has been performed to the clerk terminal 40. The notification information includes, for example, the changed content information as well as terminal information such as a terminal identifier that can specify the relevant POS terminal 10.

The notification information may include information about the products registered in the registered product storing unit 131. For example, the notification information may include information on the registered product corresponding to the ID included in the changed content information, that is, information on the registered product before the change operation was performed. Accordingly, since the clerk terminal 40 that receives the notification information can confirm the information and state of the registered products before and after the change operation, it is possible to improve the convenience of confirming the changed contents.

The notification information may include image data corresponding to the product registration screen B displayed on the displaying unit 16 of the POS terminal 10. The image data may be a snapshot of the product registration screen B or a stream broadcast of the product registration screen B displayed in real time on the displaying unit 16. Accordingly, at the clerk terminal 40, the convenience of confirming the changed contents can be improved since the state of the product registration screen B that reflects the contents of the change operation can be checked at the clerk terminal 40.

The change processing unit 105 is an example of a third receiving unit, a reflection unit, and a suppression unit. The change processing unit 105 performs the process of updating the contents of the registering process as changed by the customer in the registered product storing unit 131 based on the changed content information. Specifically, when the change processing unit 105 is instructed to terminate the product registering process (or start the payment process) by operating the accounting button Bc or the like while there is changed content information, the change processing unit 105 suppresses (delays) the execution of the accounting process so that the state in which the registered product storing unit 131 can be updated or changed is maintained.

The change processing unit 105 performs the process of reflecting the changed contents of the registered products recorded in the registered product storing unit 131 upon a confirmation operation by the clerk. The confirmation operation by the clerk may be performed through the operating unit 15 of the POS terminal 10 or by a remote operation from the clerk terminal 40. In the former case, for example, after the clerk's ID is read by the card reader 17 or the imaging device 20, the change processing unit 105 updates the registered product storing unit 131 when permission for the changes is provided. For example, the change processing unit 105 changes stored contents in the registered product storing unit 131 once the clerk approves the change(s) at the clerk terminal 40.

The confirmation by the clerk may need to be performed for each changed registered product individually or may be performed for all changed registered products at once. The change processing unit 105 may cancel a change or perform additional changes according to the clerk's input operations.

After the change processing unit 105 has reflected all the changes in the registered product storing unit 131, the change processing unit 105 notifies the payment processing unit 106 of the start of the payment process by allowing the transition to the payment process. Note that, when the termination of the product registering process or the start of the payment process is instructed when there is no changed content information, the payment process by the payment processing unit 106 can be immediately started.

The payment processing unit 106 is an example of a payment unit. The payment processing unit 106 executes a payment process for the products registered by the product registering process. Specifically, the payment processing unit 106 calculates the total price of the registered products based on the information registered in the registered product storing unit 131 and executes the payment process to so the customer can pay the total price.

Note that the payment process may be performed by the POS terminal 10 alone, or may be performed in cooperation with other devices (for example, an accounting device, a payment server, and the like).

For example, when the payment processing unit 106 receives the operation to instruct the start of payment via the operating unit 15, the payment processing unit 106 allows the displaying unit 16 to display a screen from which a payment method can be selected. When cash payment is selected, the payment processing unit 106 executes the payment process in which the total amount due for the registered products is paid with money deposited via a deposit device or the like. When electronic money payment or credit card payment is selected, the payment processing unit 106 receives input of the necessary payment information for making a payment according to the selected payment method and thus may cooperate with an external payment server to execute the payment process and pay the total amount of the transaction. Such payment information may be, for example, a credit card number or may be a two-dimensional code for code payment. Note that, in the case of the two-dimensional code for code payment, input of payment information may be received through the imaging device 20.

As illustrated in FIG. 9, the clerk terminal 40 includes a notification receiving unit 401 and a confirmation operation receiving unit 402.

The functions of the clerk terminal 40 are implemented as a software configuration by the processor of the clerk terminal 40 operating according to the control program 441 stored in the ROM 42 or the memory unit 44, but is not limited thereto. For example, a portion or all of the functions of the clerk terminal 40 may be implemented by hardware such as a dedicated circuit.

The notification receiving unit 401 performs a notification based on notification information transmitted from the POS terminal 10. Specifically, when the notification receiving unit 401 receives notification information from the POS terminal 10, the notification receiving unit 401 allows the POS terminal 10 to notify the clerk that the change operation for the registered product has been performed by causing the displaying unit 46 to display the terminal information included in the notification information and the contents of the change operation. When the notification information includes the state of the registered product before and after the change operation, the notification receiving unit 401 may display the state of the registered product before and after the change operation to be comparable to one another. Note that the notification method is not limited to visual display and may be performed using audio.

The confirmation operation receiving unit 402 receives the permission or denial for the change operation performed at the POS terminal 10 through the operating unit 45. For example, the confirmation operation receiving unit 402 transmits sends permission for the changes to the POS terminal 10.

When the change operation is confirmed at the POS terminal 10, the confirmation operation receiving unit 402 may be removed from the clerk terminal 40.

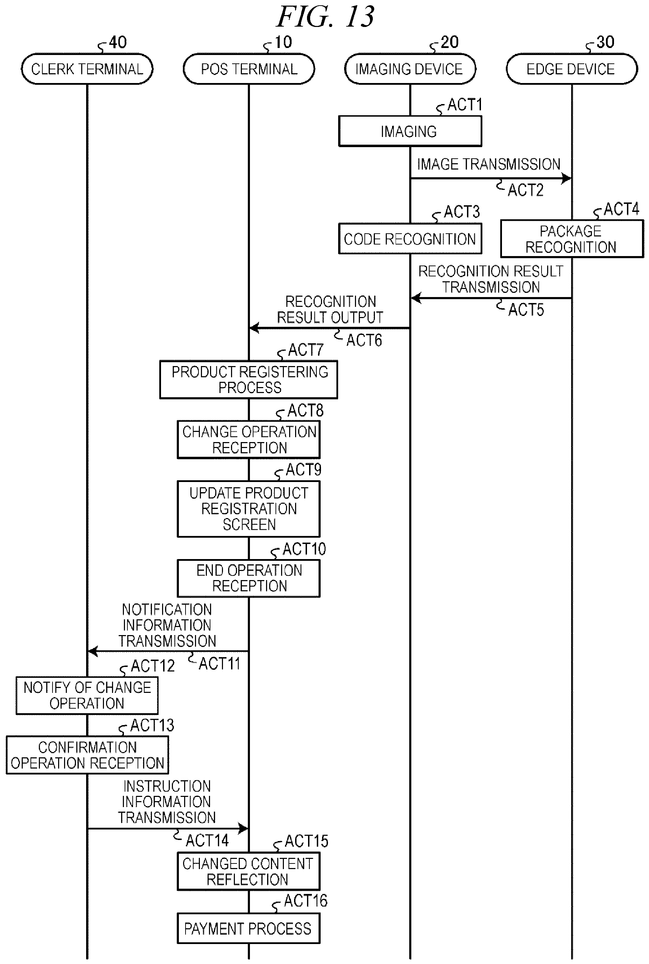

Next, a flow of processes executed by the product sales data processing system 1 will be described. FIG. 13 is a sequence diagram illustrating an example of a flow of processes executed by the product sales data processing system 1.

First, at the POS terminal 10, the customer performs the registration operation by holding a product to be purchased over the imaging device 20. The image acquiring unit 201 of the imaging device 20 acquires the image captured by the imaging unit 25 (ACT 1). Next, the image transmitting unit 202 of the imaging device 20 transmits the image to the edge device 30 (ACT 2). The code recognizing unit 203 of the imaging device 20 performs (attempts) code recognition on the image (ACT 3).

After the image is transmitted from the imaging device 20, the package recognizing unit 302 of the edge device 30 performs (attempts) package recognition on the image (ACT 4). Herein, when the product is uniquely recognized or a plurality of candidate products are identified in the package recognition, the recognition result outputting unit 303 of the edge device 30 transmits the recognition result including the product code(s) and the like of the product(s) to the imaging device 20 (ACT 5).

After the recognition result is received from the edge device 30, the recognition result outputting unit 204 of the imaging device 20 outputs the recognition result to the POS terminal 10 (ACT 6). If the product is uniquely recognized by the code recognition, the code recognizing unit 203 outputs the recognition result including the product code of the recognized product to the POS terminal 10 (ACT 6).

Note that, when the product is imaged in the customer's registration operation, the product is generally moved into the imaging range of the imaging device 20 starting from an outer edge of the product. Therefore, there is a high possibility that the recognition result of the package recognition will be output to the POS terminal 10 before the recognition result of the code recognition. However, the output order of the code recognition and the package recognition is not limited thereto.

When the recognition result is sent from the imaging device 20, the product registering processing unit 102 of the POS terminal 10 executes the product registering process based on the recognition result (ACT 7). The POS terminal 10, the imaging device 20, and the edge device 30 execute the processes of steps S1 to S7 described above each time the customer performs the registration operation on a product.

When a change operation on an already registered product is received (ACT 8), the change operation receiving unit 103 of the POS terminal 10 generates changed content information and updates the display of the product registration screen B according to the contents of the change operation (ACT 9).

Subsequently, when the POS terminal 10 receives the operation to terminate the product registration (ACT 10), the notification processing unit 104 transmits the notification information to the clerk terminal 40 because the change operation for the registered product has been performed in ACT 8 (ACT 11).

When the notification information from the POS terminal 10 is received by the clerk terminal 40, the notification receiving unit 401 notifies the clerk that a change operation on a registered product has been performed at the POS terminal 10 (ACT 12). Herein, when the confirmation operation of providing permission for the change is performed on the clerk terminal 40, the confirmation operation receiving unit 402 receives the confirmation operation (ACT 13) and transmits the permission for the changed contents to the POS terminal 10 (ACT 14).

When the change processing unit 105 of the POS terminal 10 receives the instruction information from the clerk terminal 40, the change processing unit 105 determines that the change has been confirmed and reflects the changes in the registered products recorded in the registered product storing unit 131 (ACT 15).

Next, the payment processing unit 106 of the POS terminal 10 calculates the total amount due for the registered products registered in the registered product storing unit 131, and executes the payment process based on the total amount due(ACT 16).

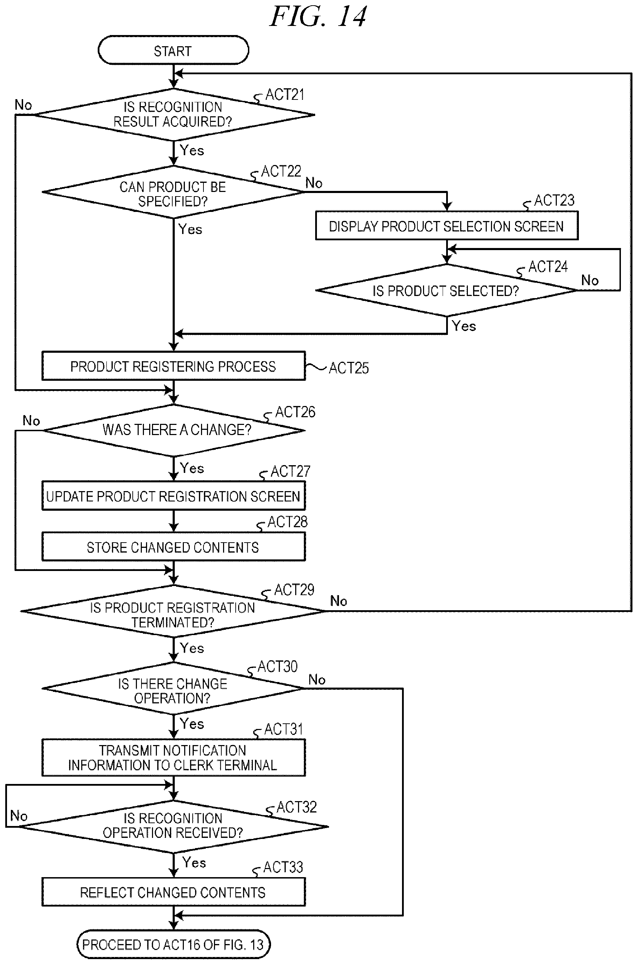

Next, with reference to FIG. 14, processes performed by the POS terminal 10 will be described. FIG. 14 is a flowchart illustrating an example of the processes performed by the POS terminal 10. Note that the processes correspond to the processes of steps S7 to S15 in FIG. 13. In this example, it is assumed that the product registration screen B is displayed on the displaying unit 16.

First, the recognition result acquiring unit 101 determines whether the recognition result has been acquired from the imaging device 20 (ACT 21). If the recognition result is not acquired (ACT 21; No), the process proceeds to ACT 26. If the recognition result acquiring unit 101 acquires the recognition result from the imaging device 20 (ACT 21; Yes), the process proceeds to ACT 22.

The product registering processing unit 102 determines whether the product can be uniquely specified based on the recognition result acquired in ACT 21 (ACT 22). Specifically, the product registering processing unit 102 determines whether a single product code is included in the recognition result from the code recognition or the package recognition.

When product can be uniquely specified (ACT 22; Yes), the product registering processing unit 102 executes the product registering process based on the product code included in the recognition result (ACT 25), and the process proceeds to ACT 26.

Note that, when the product registering processing unit 102 executes the product registering process, the product registering processing unit 102 displays the product information such as product names and prices of the registered products on the product registration screen B in the order of the registration of products.

On the other hand, when the product cannot be uniquely specified (ACT 22; No), that is, when a plurality of product codes of candidate products are included in the recognition result, the product registering processing unit 102 displays the product selection screen A from which one product can be selected from the candidate products on the displaying unit 16 (ACT 23). Next, the product registering processing unit 102 waits until a product is selected from the product selection screen A (ACT 24; No).

In ACT 24, after a product is selected from the product selection screen A (ACT 24; Yes), the product registering processing unit 102 executes the product registering process based on the product code of the selected product (ACT 25), and the process proceeds to ACT 26. Note that the product registering processing unit 102 erases the product selection screen A along with the selection of the product in ACT 25 and then displays the product registration screen B.

The change operation receiving unit 103 determines whether a change operation for any of the registered products has been received (ACT 26). Herein, when a change operation was not received (ACT 26; No), the process proceeds to ACT 29.

When the change operation receiving unit 103 determines that a change operation was received (ACT 26; Yes), the change operation receiving unit 103 updates the product registration screen B based on the received changed contents (ACT 27). Next, the change operation receiving unit 103 stores changed content information indicating the changes (ACT 28), and proceeds to ACT 29.

Next, the control unit 100 of the POS terminal 10 determines whether the operation for instructing to terminate the product registering process (or the operation for instructing to start the payment process) has been received (ACT 29). When the termination is not instructed (ACT 29; No), the process returns to ACT 21 to prepare for acquiring a new recognition result.

After the operation of instructing to terminate the product registering process is received (ACT 29; Yes), the notification processing unit 104 (and the change processing unit 105) determines whether a change operation has been performed before the termination instruction is carried out (ACT 30). Herein, when no change operation has been performed (ACT 30; No), the process immediately proceeds to ACT 16 in FIG. 13.

When it is determined in ACT 30 that a change operation was performed (ACT 30; Yes), the notification processing unit 104 transmits the change notification information to the clerk terminal 40 for notifying that a change operation has been performed on the registered products at the POS terminal 10 (ACT 31). The change processing unit 105 waits until the confirmation operation is performed by the clerk (ACT 32; No).

Note that, while waiting for the clerk's confirmation operation, the change processing unit 105 may display a message on the displaying unit 16 indicating that the confirmation process is being performed by the clerk or a message indicating that the payment should wait until the confirmation of the changes is completed.

When the change processing unit 105 receives the confirmation operation by the clerk through direct operation via the operating unit 15 or by remote operation from the clerk terminal 40 (ACT 32; Yes), the change processing unit 105 reflects the changes in the registered product storing unit 131 (ACT 33), and the process proceeds to ACT 16 in FIG. 13.

As described above, the POS terminal 10 acquires the recognition result of the code recognition and the package recognition based on the captured image of the product, and executes the product registering process for the product recognized in the recognition process. The POS terminal 10 displays the product registration screen representing each registered product, and when the change operation for the registered product is received, the contents of the change operation is reflected on the product registration screen. Then, when the POS terminal 10 receives the operation instructing the termination of the product registering process (or the start of the payment process), the POS terminal 10 transmits notification information including the contents of the change operations performed to the clerk terminal 40. Therefore, since the POS terminal 10 can allow the clerk to perform a confirming work involved with all the change operations for the registered products all at once, the burden on the clerk can be reduced.

The POS terminal 10 reflects the change operations only on the product registration screen until after the confirmation operation is performed by the clerk, and updates the registered product storing unit 131 only after the changes are confirmed in the confirmation operation by the clerk. Accordingly, the POS terminal 10 can present changes to the customer while protecting (maintaining) the registered product information in the registered product storing unit 131. When the clerk confirms the product registration screen, the POS terminal 10 can improve the distinguishability of a registered product that is the target of a change operation, so that the confirming work can be more efficient.

The POS terminal 10 receives the confirmation operation from the clerk terminal 40, and then reflects the contents of the approved changes in the registered product storing unit 131 after the confirmation operation. Accordingly, since the POS terminal 10 can reduce the need for the clerk to travel from the clerk terminal 40 to the POS terminal 10, and the efficiency of the confirming work can be improved.

When a change operation has been performed, even though the POS terminal 10 receives the operation for instructing to terminate the product registering process or start the payment process, execution of the payment process will be suppressed until the clerk performs the confirmation operation. As a result, since the POS terminal 10 can prevent payment from being made until the clerk has confirmed any changes, the occurrence of additional work such as redoing transactions or collecting additional money can be avoided. Therefore, the POS terminal 10 can facilitate transactions more efficiently.

The POS terminal 10 notifies the clerk terminal 40 of information indicating the registration state before and after the change as the notification information. Accordingly, since the POS terminal 10 can support the confirming work of the change at the clerk terminal 40, the efficiency of the confirming work can be improved.

Note that the embodiment described above can be modified. Certain modified examples are described as other embodiments. Aspects in the modifications which are the same or substantially the same as the already described embodiment may be omitted in the description of the modifications so that aspects that are different from the already described embodiment(s) can be highlighted. The modified examples described below may be implemented individually or may be implemented in appropriate combinations with one another or otherwise.

### (Modified Example 1)

In an embodiment described above, the change operation for the registered products can be received regardless of whether the products are registered by using either of code recognition or package recognition. That is, changes can be made to a registered product regardless of the product specifying method used in the product identification process. However, embodiments are not limited thereto, and the change operation may be varied depending on the product specifying method.

Specifically, the product registering processing unit 102 according to the present modified example registers the product specifying method that was used to identify the product together with the registered product information. Then, the change operation receiving unit 103, the notification processing unit 104, and the change processing unit 105 execute processes according to the product specifying method used for the registered product that becomes the target of the change operation.

For example, the change operation receiving unit 103 may be configured to permit the change operation for a registered product registered by using the package recognition but not to permit the change operation for a registered product registered by using code recognition. For example, the notification processing unit 104 may include the product specifying method used for the product in the notification information. For example, the change processing unit 105 may use different confirmation operation methods for products identified by code recognition and those identified by package recognition. For example, when a product registered through the package recognition is included the change operation, confirming by remote operation may be disabled, and confirmation operation at the POS terminal 10 may be required.

As such, in the POS terminal 10 related to the present modified example, since the process for a change operation can be varied according to the product specifying method, the modified example can be adapted to various operation forms or modes.

### (Modified Example 2)

In an embodiment, the clerk's confirmation operation is required whenever a change operation is performed on the registered products, but examples are not limited thereto. A modification in which the confirmation operation by the clerk is not required when the registered product that is a target of the change operation corresponds to a predetermined condition.

For example, the degree of similarity calculated during the package recognition may be used as the index to switch whether the confirmation operation by the clerk is required. In this example, the product registering processing unit 102 registers the degree of similarity as calculated during the package recognition of the product together with the product information and the like when executing the product registering process. Note that, when the product is specified by code recognition, the degree of similarity may be set to be empty (null) or may be set to 100%.

Products registered by misrecognition will tend to have a lower degree of similarity. Therefore, a certain degree of similarity corresponding to that which may indicate a possible misrecognition can be used as a threshold value, and whether a confirmation operation by the clerk is required can be switched based on a comparison to the threshold value. For example, when the degree of similarity is less than the threshold value, it can be determined that a legitimate change operation (deletion operation) has been performed to register the correct product, and the confirmation operation by the clerk is not required. On the other hand, when the degree of similarity at or above the threshold value, which suggests that the product identification is being changed even though the correct product was registered, it can be determined that an illegitimate change operation may have been performed, and thus a confirmation operation by the clerk is required.

In the present example, when the degree of similarity for each the registered products that are targets of the change operation is less than the threshold value, the notification processing unit 104 does not notify the clerk terminal 40 of the changes. However, when the degree of similarity is the threshold value or more for at least one of the registered products that are targets of the change operation, the notification processing unit 104 sends notification to the clerk terminal 40 similarly to the embodiment described above. Note that the notification processing unit 104 may be configured to exclude information related to those registered products for which the degree of similarity is less than the threshold value from the notification.

When the degree of similarity for all the registered products that are targets of the change operation are less than the threshold value, the change processing unit 105 does not require the clerk's confirmation operation and reflects the changed contents recorded in the changed content information on the registered product storing unit 131. Note that, when the degree of similarity for one or all of the registered products that are targets of the change operation is at or above threshold value, the change processing unit 105 requires the clerk's confirmation operation and holds on the existing registration in the registered product storing unit 131 until the confirmation operation is performed.

As such, in the POS terminal 10 according to the present modified example, the POS terminal 10 can be adapted to various operational forms since it is possible to change the confirmation necessity and the confirming method according to the registered products that are targets of the change operation.

### (Modified Example 3)

In an embodiment, the confirmation operation by the clerk is required regardless of the contents of the change operation, but the embodiments are not limited thereto. For example, when the contents of the change operation corresponds to some predetermined condition, the confirmation operation by the clerk is not required.

Specifically, if the change operation is to the increase the registered number of the same product type, , it may be assumed that a legitimate change operation has occurred since by such a change repeated registration operations for products of the same type can be omitted. Therefore, the confirmation operation by the clerk may be unnecessary.

In this context, the notification processing unit 104 does not notify the clerk terminal 40 when the change operation just instructs an increase in numbers. The notification processing unit 104 may be configured to exclude the information related to changes that are increases in registered numbers from the notification information.

When a deletion or reduction in registered numbers for registered products is instructed, the change processing unit 105 requires a confirmation operation by the clerk, and updating of information in the registered product storing unit 131 is suspended until the confirmation operation is performed.

As such, in the POS terminal 10 according to the present modified example, , the POS terminal 10 can be adapted to various operational forms since it is possible to change the confirmation necessity and the confirmation method of the clerk according to the details of the change operation.

### (Modified Example 4)

In an embodiment, when the change operation is performed on a registered product, the notification information is transmitted to the clerk terminal 40 when the termination of the product registering process is instructed (or the start of the payment process is instructed). However, the timing for notifying the clerk terminal 40 is not limited thereto, and the notification may be performed at the time when the change operation is performed.

Here, the notification processing unit 104 includes the most recent change operation in the notification information and transmits the notification information to the clerk terminal 40. The change processing unit 105 reflects the change operation in the registered product storing unit 131 according to a confirmation operation by the clerk. Here, the change processing unit 105 may be able to register a new product or perform another change operation even though the clerk has not yet performed the confirmation operation. However, it is still usually preferable to prevent the payment process from being executed until the clerk's confirmation operation has been performed.

Note that the notification processing unit 104 may notify the clerk terminal 40 every time a change operation is performed, or the notification processing unit 104 may control whether notification to the clerk terminal 40 is considered necessary according to the details the change operation or the degree of similarity of the registered product that is the target of the change operation.

For example, when the contents of the change operation instructs an increase in registered numbers, the notification processing unit 104 may be configured to not notify the clerk terminal 40. When a change operation is performed on a registered product for which the degree of similarity in the recognition process was less than the threshold value, the notification processing unit 104 may be configured to not notify the clerk terminal 40. As such, when there is a high possibility that a legitimate change operation has been performed, the necessity for the clerk to perform the confirmation operation can be reduced by excluding certain information related to a registered product from the notification targets so that the burden can be reduced on the clerk.

The notification processing unit 104 may supply both a notification when the termination of the product registering process is instructed (or the start of the payment process is instructed) and a notification at the time when the change operation is performed. For example, when the change operation is a deletion of a registered product or the degree of similarity of the registered product is the threshold value or more, there is a higher possibility that an illegitimate change operation has been performed, and the notification processing unit 104 may thus perform the notification when the change operation is performed. On the other hand, when a change operation is performed under other conditions, the notification may be performed when the termination of the product registering process is instructed (or the start of the payment process is instructed).

As a result, in the POS terminal 10 according to the present modified example, when an illegitimate change operation is likely to have been performed, the clerk can promptly confirm the changed contents. When a typically legitimate change operation such as a change operation on registered products for which the degree of similarity was less than the threshold value, a confirmation operation can be performed only once at the end of the registration process. Therefore, the POS terminal 10 can reduce the need for confirmation operations performed by the clerk and can reduce the burden on the clerk.

### (Modified Example 5)

In an embodiment, the state of the registered products before and after the change operation is included in the transmitted notification information. In the present modified example, to further improve the efficiency of the confirming work, information about the actual registered product that is the target of the change operation is included in the notification information.

In this modification, the POS terminal 10 further includes an imaging device (hereinafter also referred to as a monitoring camera) such as a camera that can capture an image of the products brought to the POS terminal 10 by the customer. In some examples, the monitoring camera may be implemented by using the imaging device 20.

The change operation receiving unit 103 of the present modified example is triggered by receiving a change operation to acquire a monitoring image (either a still image or moving image) captured by the monitoring camera at or over a predetermined period of time. The monitoring image is stored in association with the changed content information for the registered product. When transmitting the notification information to the clerk terminal 40, the notification processing unit 104 of the present modified example transmits the monitoring image associated with the changed content information as along with the notification information.

Accordingly, at the clerk terminal 40, it is possible to check the monitoring image as well as the contents of the change operation. Specifically, the clerk using the clerk terminal 40 can confirm the actual product or the customer's actions using the monitoring image after the change operation is performed. Therefore, the POS terminal 10 according to the present modified example can provide the clerk with additional information as to whether the operation is unfair, and thus, can support the confirming work after a change operation has been performed.

### (Modified Example 6)

In an embodiment, when the change operation is performed on a registered product, notification information is transmitted to the clerk terminal 40 to notify the clerk that the change operation has been performed. However, the notification method is not limited thereto, and the clerk may be notified by other methods.

For example, when the POS terminal 10 includes a notification device such as a warning light, the notification processing unit 104 may control the notification device to indicate that the change operation has been performed. In such a case, the clerk can recognize that the change operation has been performed by looking at the state of the notification device such as a warning light, and then head to the POS terminal 10 where the change operation has been performed.

Therefore, for a system configuration that does not incorporate a clerk terminal 40, it is possible to achieve the similar effects as in the embodiment described above.

### (Modified Example 7)

In an embodiment, the image device 20 performs the code recognition, but embodiments are not limited thereto, and the POS terminal 10 or the edge device 30 may perform the recognition processing.

For example, when the code recognition is performed by the POS terminal 10, the image transmitting unit 202 of the imaging device 20 transmits (outputs) the image obtained by the imaging to the POS terminal 10. The POS terminal 10 provides the described functions of the code recognizing unit 203, and performs the code recognition processing on the image transmitted from the imaging device 20.

If the code recognition is performed by the edge device 30, the edge device 30 provides the described functions of the code recognizing unit 203, and executes the code recognition on the image transmitted from the imaging device 20. In this case, the recognition result outputting unit 303 of the edge device 30 outputs the code recognition results and the package recognition results in the order of results obtained first.

In an embodiment, the edge device 30 performs the package recognition, but embodiments are not limited thereto, and the POS terminal 10 or the imaging device 20 may perform the package recognition processing.

If the package recognition is performed by the POS terminal 10, the image transmitting unit 202 of the imaging device 20 transmits (outputs) the image obtained by the imaging to the POS terminal 10 for processing. The POS terminal 10 provides the described functions of the package recognizing unit 302, and performs the package recognition processing on the image transmitted from the imaging device 20.

If the package recognition is performed by the imaging device 20, the imaging device 20 provides the described functions of the package recognizing unit 302, and executes the package recognition processing on the image obtained by the imaging device 20. In this case, the recognition result outputting unit 204 of the imaging device 20 outputs the code recognition results and the package recognition results in the order of the results obtained first.

In an embodiment described above, the edge device 30 is described as a single device, but the edge device 30 is not limited thereto, and, in other examples, the edge device 30 may be implemented as a cloud device (cloud computing solution) or the like configured with a plurality of information processing devices operating in cooperation. In some examples, store server 50 may provide the functions of the edge device 30.

### (Modified Example 8)

In an embodiment described above, the POS terminal 10 is operated by the customers themselves. However, embodiments are not limited thereto, and the POS terminal 10 may be operated by a clerk in the store. In such a case, the imaging device 20 images products based on the registration operations of the clerk.

### (Modified Example 9)

In an embodiment described above, the POS terminal 10 includes a single (one) imaging device 20 (or imaging unit 25). However, the configuration is not limited thereto, and a plurality of imaging devices 20 (or imaging units 25) may be used. In such a case, the code recognition processing may be performed by each of the imaging devices 20 or by just one imaging device 20. It is generally preferable that the plurality of imaging devices 20 (or imaging units 25) be positioned to image the product from different imaging positions. Accordingly, the product can be imaged from a plurality of angles, so that a recognition speed and a recognition rate can be improved.

Note that programs and/or software executed by each device of the embodiments (and modified examples) described above can be installed in advance in ROM, a storing unit, or the like or may be recorded on a non-transitory, computer-readable recording medium such as a CD-ROM, a flexible disk (FD), a CD-R, or a digital versatile disk (DVD) and provided as files in an installable or executable format.

The program executed by each device of the embodiment described above may be configured to be stored on a computer connected to a network, such as the Internet, and/or may be provided by being downloaded and/or accessed via the network. The program executed by each device described above may be configured to be provided or distributed across a network such as the Internet.

While certain embodiments of the present disclosure have been described, the embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the disclosure. These embodiments and modifications fall within the scope of the disclosure and fall within the disclosure described in the claims.

## Claims

1. A point-of-sale device (10), comprising:
an interface unit (101) for acquiring a recognition result from an external device, the recognition result being a recognition of a product based on a captured image of the product;
a user input unit (15, 45) for receiving user operations; and
a processor (11, 21, 31, 41, 51) configured to:
execute a registering process for registering the product in a sales transaction based on the acquired recognition result;
cause a display screen to display a list of each product registered in the sales transaction;
receive a change operation via the user input unit to change a registered product on the list;
add information corresponding to the change operation to the list displayed on the display screen;
receive a termination operation from the user input unit, the termination operation indicating an end of the registering process; and
after receiving the termination operation, send a change notification to a clerk terminal if the change operation was received before the termination operation was performed.

2. The point-of-sale device according to claim 1, wherein the processor is further configured to:
receive a change confirmation operation for confirming the change operation; and
update products registered in the sales transaction to reflect the change operation confirmed by the received change confirmation operation.

3. The point-of-sale device according to claim 2, wherein change confirmation operation is received from the clerk terminal.

4. The point-of-sale device according to any one of claims 1 to 3, wherein the change notification includes information indicating registered products on the list before and after the change operation.

5. The point-of-sale device according to any one of claims 2 to 4, wherein the change confirmation operation is received from the user input unit.

6. The point-of-sale device according to any one of claims 2 to 5, wherein the processor is further configured to:
perform a payment processing for the sales transaction after the change confirmation operation is performed.

7. The point-of-sale device according to any one of claims 1 to 6, wherein the information corresponding to the change operation is a strikethrough of a deleted registered product.

8. The point-of-sale device according to any one of claims 1 to 7, wherein the interface unit is connected to an imaging device.

9. The point-of-sale device according to any one of claims 1 to 8, wherein the interface unit is connected, via a network, to an edge device for image analysis.

10. A point-of-sale system, comprising:
an imaging device (20);
the point-of-sale device of any one of claims 1 to 9;
an edge device (30) connected to the imaging device and the point-of-sale device and configured to perform object recognition processing on images from the imaging device, wherein
the point-of-sale device is connected to the imaging device, and the interface unit is a unit for acquiring a recognition result from the edge device or the imaging device.

11. The point-of-sale system according to claim 10, further comprising:
a clerk terminal (40) connected to the point-of-sale device, wherein change confirmation operation is received from the clerk terminal.

12. The point-of-sale system according to claim 10 or 11, wherein the recognition result includes a plurality of candidate products.

13. A point-of-sale method, comprising: acquiring a recognition result from an external device, the recognition being a recognition of a product based on a captured image of the product;
executing a registering process for registering the product in a sales transaction based on the acquired recognition result;
causing a display screen to display a list of each product registered in the sales transaction;
receiving a change operation via a user input unit to change a registered product on the list;
adding information corresponding to the change operation to the list displayed on the display screen;
receiving a termination operation from the user input unit, the termination operation indicating an end of the registering process; and
after receiving the termination operation, sending a change notification to a clerk terminal if the change operation was received before the termination operation was performed.

14. The point-of-sale method of claim 13, further comprising:
receiving a change confirmation operation for confirming the change operation; and
updating products registered in the sales transaction to reflect the change operation confirmed by the received change confirmation operation.

15. The point-of-sale method according to claim 14, wherein the change confirmation operation is received via the user input unit.
